# EUROPEAN PATENT APPLICATION

(11) **EP 3 578 887 A1**
(43) Date of publication of application: **11.12.2019**
(21) Application number: 18176392.1
(22) Date of filing: 07.06.2018
(51) Int. Cl.: F24F 3/14, F24F 120/14, F24F 130/00

(54) **AN AIR QUALITY CONTROL SYSTEM AND METHOD**

(71) Applicant: Koninklijke Philips N.V., 5656 AE Eindhoven (NL)
(72) Inventor: WRIGHT, Christopher John, 5656 AE Eindhoven (NL); VAN DEN BERG, Jan Jasper, 5656 AE Eindhoven (NL); BUIL, Vincentius Paulus, 5656 AE Eindhoven (NL); GEURTS, Lucas Jacobus Franciscus, 5656 AE Eindhoven (NL)
(74) Representative: de Haan, Poul Erik

(57) **Abstract**

An air quality control system and method is provided, in which a humidity level is controlled in such a way as to reduce an amount of dust resuspension caused by occupant or device activities in an indoor space, and taking into account type of floor surface in that space.

## Description

### FIELD OF THE INVENTION

This invention relates to the control of air quality. It relates in particular to air quality in indoor spaces, and relates in particular to air quality issues relating to suspended dust.

### BACKGROUND OF THE INVENTION

Air quality is an increasing concern for people, and there is increasing interest in air quality monitoring and control generally.

With regard to indoor air quality, resuspension of dust due to human and autonomous device activity (such as vacuum cleaners) is a major contributor to lower indoor air quality.

Resuspension of dust is influenced by many factors such as dust load, surface type, activity type and relative humidity level. The effect of each of these parameters on dust resuspension characteristics can also change depending on the other factors. For example, a high relative humidity affects dust resuspension characteristics of different surface types in opposite ways, enhancing resuspension on carpets and decreasing it on hard floors.

Different areas within a home may have different floor types with varying dust resuspension characteristics that are strongly influenced by the relative humidity within the area. For example, one humidifier may control the relative humidity in both a kitchen and a living area with hard and soft floor types respectively.

There are several new devices and techniques that are able to measure, identify or predict user location and activity in the smart home. This analysis allows automated smart home systems to adapt to a user's activities and routines. For example, systems are known which use a beamforming microphone array to listen to sounds across a room, which may be used to non-invasively determine common user activities.

Dust resuspension in an indoor environment is currently primarily controlled by the frequency of surface cleaning. Cleaning frequency alters the average dust load deposited on a surface and therefore the number of particulates that are resuspended due to other activities. However, even a cleaning activity itself will cause dust resuspension and therefore may reduce the air quality.

It is known to control indoor relative humidity for the purposes of allergen reduction, for example as disclosed in US7264649. Relative humidity control is used to reduce the immunogenicity of house dust through the effects of relative humidity on dust mite populations. However, this does not recognize the issue of dust resuspension.

The article "Estimating the resuspension rate and residence time of indoor particles" in the Journal of the Air & Waste Management Association, ISSN: 1096-2247 provides a report on the effect of particle resuspension caused by human activity in the home.

### SUMMARY OF THE INVENTION

The invention is defined by the claims.

According to examples in accordance with an aspect of the invention, there is provided an air quality control system, comprising:
an air treatment unit for controlling a humidity level in an indoor space; and
a controller for controlling the air treatment unit, wherein the controller comprises:
   a first input for receiving a floor type indication relating to floor types within the indoor space; and
   a second input for receiving activity information relating to occupant or device activities which are taking place on a floor area within the indoor space,
wherein the controller is adapted to control the humidity level in dependence on the activity information and floor type indication, thereby to reduce an amount of dust resuspension caused by the occupant or device activities.

This system is used to control an indoor environment, in particular a humidity level, in order to reduce the effect of dust resuspension. The invention is based on the recognition that different floor types (e.g. hard, wooden floors vs. soft carpeted floors) as well as different activities (e.g. walking around that floor area, vacuum cleaning, opening a door or window which creates a draft across the floor) give rise to different levels of dust resuspension, and that this may be brought under control by controlling the relative humidity in an indoor space. Thus, by monitoring the activities and floor types, humidity control may be implemented when needed to reduce the amount of dust which is resuspended, thereby maintaining desired air quality.

The floor type indication may comprise at least a hard floor or soft floor indication. Hard and soft floors have different behavior in terms of settled dust. A hard floor for example may comprise wood, tiles, laminate, cork, PVC. The floor type indication may additionally distinguish different hard floor types and/or between different soft floor types.

The controller is for example adapted to generate a map of floor types in different floor areas of the indoor space. This map may then be used to predict the impact on air quality of different activities taking place in different floor areas. For example, with knowledge of the floor type in a kitchen, hall, lounge etc., it can be predicted what the impact on air quality will be of different household activities, such as arriving or leaving the house, cooking, cleaning, or relaxing in a lounge. It may also be assumed that certain areas are more exposed to collect dust, such as near front and back doors. This may also be included in the map.

The controller may comprise a third input for receiving user behavior information. This information enables a model of user behavior to be created, which may be combined with the map of floor types so that the impact of user behavior on air quality can be assessed. The user behavior may include pet behavior.

The controller may be adapted to predict future occupant activities based on the user behavior information. Thus, a floor use profile may be created which may be used for predicting future floor use behavior.

The controller may be adapted to control the humidity level further in dependence on an air quality target and/or a comfort level target. Thus, a desired air quality target and/or a desired comfort level target may be set, and the humidity control may then aim to achieve the desired targets. There may be more than these two targets, and different users may for example have different priority levels for the different targets.

The system may further comprise:
an activity sensor for providing the activity information to the controller; and
a floor sensor for providing the floor type indication to the controller.

The system may receive the sensor information from remote external sensors or inputs. However, the system may in this example include the required sensors.

By way of example, the floor sensor may comprise an acoustic sensor or an image sensor. These sensor types may be used to detect echoes as a way of determining a floor type. Different acoustic profiles for the same activity and hence the same sound source (e.g. walking or the sound of a motor) may be used to distinguish between different floor types. Acoustic analysis or other sensor inputs such as proximity sensors may also be used to detect location, so that a detected floor type is associated with a particular area within the indoor space.

Thus, the system may further comprises a location sensor, associated with the floor sensor and/or separate to the floor sensor.

The system may comprise a robotic vacuum cleaner, wherein the floor sensor and a location sensor are integrated into the robotic vacuum cleaner. Thus, a robotic vacuum cleaner is used to collect the required floor type information and also the location information in respect of those floor types. As a minimum, the activity being monitored is the act of vacuum cleaning itself (i.e. a device activity) and in this case the robotic vacuum cleaner may also incorporate the activity sensor. However, other activities are preferably also monitored such as occupant activities (e.g. where they are located and what they are doing).

The invention also provides an air quality control method, comprising:
receiving a floor type indication of floor types within an indoor space;
receiving activity information relating to occupant or device activities which are taking place on a floor area within the indoor space; and
controlling a humidity level in dependence on the activity information and floor type indication, thereby to reduce an amount of dust resuspension caused by the occupant or device activities.

The floor type indication may comprise at least a hard floor or soft floor indication and the method comprises generating a map of floor types in different floor areas of the indoor space.

The method may comprise predicting future occupant activities based on user behavior information. The floor type indication and activity information may be received from a robotic vacuum cleaner.

The invention may be implemented at least in part in software.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows an air quality control system;
Figure 2 shows an air quality control method; and
Figure 3 shows a computer architecture suitable for implementing the controller of the system of Figure 1.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides an air quality control system in which a humidity level is controlled in such a way as to reduce an amount of dust resuspension caused by occupant or device activities in an indoor space, and taking into account type of floor surface in that space.

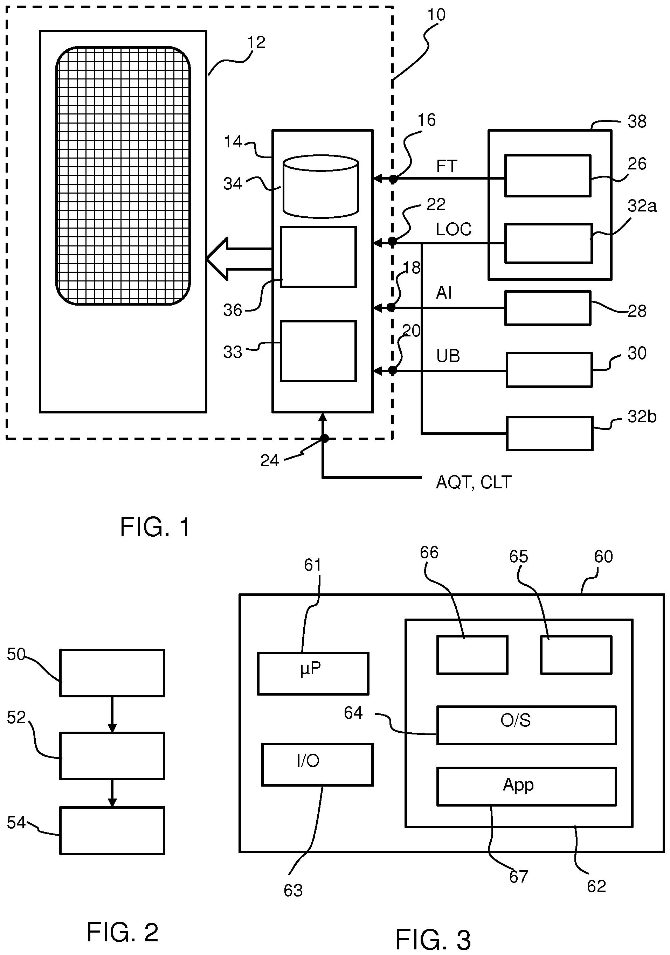

Figure 1 shows an air quality control system 10 comprising an air treatment unit 12 for controlling a humidity level in an indoor space. The air treatment unit 12 is a humidifier and/or dehumidifier, and optionally also an air purifier.

A controller 14 is used to control the air treatment unit.

The controller 14 comprises a first input 16 for receiving a floor type indication (FT) relating to floor types within the indoor space. The floor type indication may comprise at least a hard floor or soft floor indication. Hard and soft floors have different behavior in terms of settled dust. However, there may be more than two floor types. The floor type may be determined based on analysis of the effect of the floor on sounds, picked up by a microphone either within the air treatment device, or by separate floor type sensors for example in a robot vacuum cleaner. A measurement of friction encountered by the wheels of the robot cleaner may also be used. Alternatively, the floor type information may be input by the user through a user interface, thereby providing the controller with a spatial model of the indoor space. Another way to determine the floor type is by visual recognition for example using a camera of the user, or using a camera in the home.

A second input 18 is for receiving activity information (AI) relating to occupant or device activities which are taking place on a floor area within the indoor space. These activities may include occupants or pets walking around a particular floor area, playing with a dog, play activity in a children's play area, or devices operating such as automated vacuum cleaner. Known sensors may be used for detecting activities, including occupancy sensors and sound sensors, and appliances which are used by a user may relay their active status as part of the second input - for example a television is turned on, a microwave oven is being used, a cupboard door or fridge door is open, etc. The user may even have the option to provide a manual input to indicate an activity they are about to undertake.

The activity information may also include pet behavior. By way of example, dogs and cats may have favorite spots to lay down or sleep, and this may be determined by detecting (or inputting) the location of pet beds, or by detecting movement patterns of the pets.

A third input 20 is for receiving user behavior information (UB). This user behavior for example tracks user activities, such as when they cook, dine, relax in the lounge, go to work, come home from work, go to bed etc. All of this behavior information may be used to generate a behavior profile, which may then be used to predict future behavior events. These events for example together may form a floor use profile in respect of the particular indoor space. Similar sensors may be used for determining a behavior profile as for detecting activities.

A fourth input 22 is for receiving user (or device) location information (LOC). This location information enables the floor type identification, and activity information, to be associated with specific areas of the indoor space. Tracking of the location of people and domestic animals in a house, when they walk from room to room, can be achieved using wireless signal strength, cameras, sound detection of walking and speech sounds etc. There may also be determination of how may people (or pets) are active in one area, and the location information may be used to determine a speed of walking or an intensity of an activity.

In this way, a map of floor types in different floor areas of the indoor space may first be generated. This map may then be used to predict the impact on air quality of different activities taking place in those different floor areas, as predicted or measured by the user behavior information. For example, with knowledge of the floor type in a kitchen, hall, lounge etc., it can be predicted what the impact on air quality will be of different household activities, such as arriving or leaving the house, cooking, cleaning, or relaxing in a lounge. The map of floor types may additionally include information about surfaces such as couches, seats and plants that collect dust, which is released due to activity (people or pets) or airflows. The mapping may also include volume mapping of the spaces as this also has an impact on the dust behavior.

A fifth input 24 is for receiving an air quality target (AQT) and/or a comfort level target (CLT). These targets may be used to set a desired effect of the control on the air quality in the indoor space. Different users may have different requirements in respect of these targets, and where multiple targets cannot all be achieved, different users may have different priorities. For example, a user with allergies may give the air quality a higher priority whereas another user may give the comfort level a higher priority. There may be multiple profiles for different situations. For example, when a person with allergies walks into the room, a more intense air purification setting may be used (with a higher noise level), to support this user.

The floor type indication FT is received from a floor sensor 26, the activity information AI is received from an activity sensor 28 and the user behavior information UB is received from behavior sensors 30. Figure 1 shows two possible location sensors; a first 32a is for identifying the locations of the different floor types and a second 32b is for tracking the location of a user. The system may comprise a robotic vacuum cleaner 38, and as shown in Figure 1 the floor sensor 26 and the first location sensor 32a (which determines the vacuum cleaner location) are integrated into the robotic vacuum cleaner 38. Thus, a robotic vacuum cleaner maybe used to collect the required floor type information and also the location information in respect of those floor types. The second location sensor 32b may be used to detect an occupant location. The air quality target AQT and/or comfort level target CLT are received as user inputs. The balance between these targets may also be input by the user as a set of priority levels.

The controller 14 comprises a floor use algorithm 33, a database 34 and a humidity control algorithm 36. The controller may be part of the air treatment unit, but it may instead be implemented as software provided on a separate device such as a smart phone, tablet or laptop.

This system is used to control the humidity level in the indoor space, in order to reduce the effect of dust resuspension. Different floor types (e.g. hard, wooden floors vs. soft carpeted floors) as well as different activities (e.g. walking around that floor area, vacuum cleaning) give rise to different levels of dust resuspension. By way of example, a relatively high humidity is desired if there are activities which are likely to disturb dust on a hard floor, whereas a relatively low humidity is desired if there are activities which are likely to disturb dust on a carpeted floor.

Thus, by monitoring as a minimum the activities taking place and the corresponding floor types, humidity control may be implemented when needed to reduce the amount of dust which is resuspended, thereby maintaining a desired air quality, and optionally also while maintaining comfort levels within acceptable levels.

The floor use algorithm 33 calculates the activity in a room in terms of the proportion of those activities occurring on different floor types, thereby to create a floor use profile. The floor use profile may be averaged over time or it may be based on an instantaneous measurement considering multiple moving entities within the indoor space. The floor use profile may comprise multiple data points extending into the future as predictions.

For example, a user may be known to usually spend 20 minutes cooking while on a hard floor before moving to a carpeted area. Alternatively, an autonomous vacuum cleaner may always follow a pre-set path. Examples of other activities that have an effect on the floor use profile include cleaning activities like manual vacuuming, house cleaning with a convective plume, operation of an air conditioning system or the use of heating and fans, etc.

An effect of temperature on the propensity for dust release may also be taken into account.

The floor use profile may even extend to the opening of doors or windows that enable the wind to blow through the house past that particular floor area. By opening doors or windows combined with a higher outdoor air pressure, a draft can be created in the house that has an effect. These indoor air currents may thus also be considered to result from particular user behavior.

Thus, the behavior sensors 30 may include outdoor wind speed and direction sensors and an air pressure sensor, in combination with door and window setting (open/closed) sensors. Opening of doors and windows and air pressure differences can for example be detected by wirelessly connected (Internet of Things) sensors. The sensors may additionally be able to detect sitting-standing events or determine the speed of walking in the house.

The database 34 for example stores air quality and/or comfort level targets of the user, and optionally also user-selected prioritization weightings for use in the control of the air treatment device.

The humidity control algorithm 36 determines the adjustment or protocol of adjustments to be made to the humidity settings. These may comprise a single setting or time-series of humidity settings with implementation times.

Figure 2 shows an air quality control method.

In step 50, a floor type indication is received of floor types within the indoor space. This enables a map of floor types to be generated. This may may be gathered via a vacuum cleaner robot 38 with a camera on the bottom functioning as the floor type sensor, or the information may be entered manually in combination with a house map. This may for example include an indication of a ratio of hard floor to soft floor in different areas. As mentioned above, in addition to a floor type indication, the space volume and an indication of the number of active surfaces (couches, dogbeds, plant leaves etc.) maybe used.

In step 52, activity information is received relating to occupant or device activities which are taking place on a floor area within the indoor space.

This activity information enables a floor use profile to be determined. This for example involves correlating known acoustic features which result from user interaction with different floor types. These acoustic features are stored in the database 34. Known acoustic features may consist of frequency ranges caused by the impact of walking on different known flooring types.

By analyzing acoustic profiles resulting from motion within a room, different activities, such as walking or autonomous device movement, may be recognized (regardless of the floor type) from acoustic cues such as a step period or motor noise. For a given detected activity, different acoustic profiles for the same activity are detected depending on the floor type so that the floor type can then be determined.

Thus, to link a detected activity to a particular floor type, the location at which the activity is detected may be used to access the floor type map and thereby determine the floor type, and/or the activity detection itself may enable determination of the floor type. The proportion of time spent on different floor types may be detected by an autonomous device.

The activity information may even be used to generate automatically the floor type map. This could for example involve detecting a walking sound, detecting a direction using a microphone array (for example provided at the air treatment device) or in a conversational assistant device (such as Google Home ™), and detecting a distance by analyzing a relative sound amplitude and/or reverberations. This enables the location to be determined. The floor type may then be determined based on acoustic features for example using spectral analysis. The floor type map may then be generated in relation to the microphone array.

In step 54, the humidity level is controlled in dependence on the activity information and floor type indication, thereby to reduce an amount of dust resuspension caused by the occupant or device activities. The humidity level is additional controlled taking into account the user target levels for air quality and/or comfort.

The humidity level is controlled by the humidity setting derived by the humidity control algorithm 36.

By way of example, the algorithm 36 determines the ability of the possible humidity settings to achieve the desired target air quality (AQT) and/or comfort level target based on the floor type map and floor use profile. A look up table may be used to assess the impact of different humidity settings. Thus, there may be a target atmosphere set by the user, which is a combination of, or compromise between, air quality and comfort.

For example, a high humidity setting may be given a negative air quality benefit but a positive comfort benefit, based on a floor use profile which indicates activity occurring solely on carpeted floors. The range of possible humidity settings will in practice be limited by the capabilities of the air treatment device and its location relative to the indoor area being treated. A benefit optimization function may thus be used to determine the air treatment device humidity setting with the maximum overall benefit, based on the predefined and user dependent prioritization weightings.

The analysis may be performed for multiple time points in the floor use profile to determine the humidity settings at certain time points in the future. A pre-determined estimate for the time taken for the humidity settings to affect the actual conditions in the room may be used to calculate the times at which the humidity settings should be implemented.

Other factors such as user presence may be measured used for determining the humidity setting. For example, a low air quality may have a high cost value if the user is present and a low cost value if they are not.

The floor use algorithm 33 may differentiate between different individuals or types of room occupants, such as infants or pets. The humidity control algorithm 36 may then assign cost or benefit values to the humidity settings that are specific to the particular user or occupant type that has been detected.

In multiple room occupant scenarios, different room occupants may have target levels which correspond to different optimal humidity settings. In this case, a prioritization algorithm may arbitrate between which optimum is used. For example, a high humidity setting may be chosen if an infant is detected on a hard floor, as their activity has a much greater effect on their inhaled dust levels (they are more active and closer to the floor), and their health is likely to be of greater concern.

In some examples where significant resuspension may occur from surfaces that are non-floor, such as furniture or walls, the floor use algorithm may include the capability to differentiate more types of surface interaction.

A building may have multiple air treatment devices, with different devices allocated to different areas. These devices may communicate with each other to coordinate the humidity control.

The air treatment device may include an air purification/filtering function. It may be desirable (in the absence of occupants) to deliberately cause dust resuspension so that filtering can take place before the dust resettles. Thus, the controller may be used deliberately to increase resuspension in combination with ramping up an air purification function as a way to perform cleaning of an area. This is of interest when it is certain that the increased resuspension will not negatively affect the occupant, as it will increase the general cleanliness of the space.

The system described above makes use of a controller for processing data.

Figure 3 illustrates an example of a computer 60 for implementing the controller or processor described above.

The computer 60 includes, but is not limited to, PCs, workstations, laptops, PDAs, palm devices, servers, storages, and the like. Generally, in terms of hardware architecture, the computer 60 may include one or more processors 61, memory 62, and one or more I/O devices 63 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 61 is a hardware device for executing software that can be stored in the memory 62. The processor 61 can be virtually any custom made or commercially available processor, a central processing unit (CPU), a digital signal processor (DSP), or an auxiliary processor among several processors associated with the computer 60, and the processor 61 may be a semiconductor based microprocessor (in the form of a microchip) or a microprocessor.

The memory 62 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 62 may incorporate electronic, magnetic, optical, and/or other types of storage media. Note that the memory 62 can have a distributed architecture, where various components are situated remote from one another, but can be accessed by the processor 61.

The software in the memory 62 may include one or more separate programs, each of which comprises an ordered listing of executable instructions for implementing logical functions. The software in the memory 62 includes a suitable operating system (O/S) 64, compiler 65, source code 66, and one or more applications 67 in accordance with exemplary embodiments.

The application 67 comprises numerous functional components such as computational units, logic, functional units, processes, operations, virtual entities, and/or modules.

The operating system 64 controls the execution of computer programs, and provides scheduling, input-output control, file and data management, memory management, and communication control and related services.

Application 67 may be a source program, executable program (object code), script, or any other entity comprising a set of instructions to be performed. When a source program, then the program is usually translated via a compiler (such as the compiler 65), assembler, interpreter, or the like, which may or may not be included within the memory 62, so as to operate properly in connection with the operating system 64. Furthermore, the application 67 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, .NET, and the like.

The I/O devices 63 may include input devices such as, for example but not limited to, a mouse, keyboard, scanner, microphone, camera, etc. Furthermore, the I/O devices 63 may also include output devices, for example but not limited to a printer, display, etc. Finally, the I/O devices 63 may further include devices that communicate both inputs and outputs, for instance but not limited to, a network interface controller (NIC) or modulator/demodulator (for accessing remote devices, other files, devices, systems, or a network), a radio frequency (RF) or other transceiver, a telephonic interface, a bridge, a router, etc. The I/O devices 63 also include components for communicating over various networks, such as the Internet or intranet.

When the computer 60 is in operation, the processor 61 is configured to execute software stored within the memory 62, to communicate data to and from the memory 62, and to generally control operations of the computer 60 pursuant to the software. The application 67 and the operating system 64 are read, in whole or in part, by the processor 61, perhaps buffered within the processor 61, and then executed.

When the application 67 is implemented in software it should be noted that the application 67 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope.

The use of this invention is of particular benefit in situation where dust resuspension activities occur within a space that has multiple floor types present. The system is likely to be most effective when a room occupant engages in a predictable pattern of behavior, occupying one floor type for a certain length of time before switching to another.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. An air quality control system (10), comprising:
an air treatment unit (12) for controlling a humidity level in an indoor space; and
a controller (14) for controlling the air treatment unit, wherein the controller comprises:
a first input (16) for receiving a floor type indication (FT) relating to floor types within the indoor space; and
a second input (18) for receiving activity information (AI) relating to occupant or device activities which are taking place on a floor area within the indoor space,
wherein the controller (14) is adapted to control the humidity level in dependence on the activity information (AI) and floor type indication (FT), thereby to reduce an amount of dust resuspension caused by the occupant or device activities.

2. A system as claimed in claim 1, wherein the floor type indication (FT) comprises at least a hard floor or soft floor indication.

3. A system as claimed in claim 1 or 2, wherein the controller (14) is adapted to generate a map of floor types in different floor areas of the indoor space.

4. A system as claimed in any one of claims 1 to 3, wherein the controller (14) comprises a third input (20) for receiving user behavior information (UB).

5. A system as claimed in claim 4, wherein the controller (14) is adapted to predict future occupant activities based on the user behavior information.

6. A system as claimed in any one of claims 1 to 5, wherein the controller is adapted to control the humidity level further in dependence on an air quality target (AQT) and/or a comfort level target (CLT).

7. A system as claimed in any one of claims 1 to 6, further comprising:
an activity sensor (28) for providing the activity information to the controller; and
a floor sensor (26) for providing the floor type indication to the controller.

8. A system as claimed in claim 7, wherein the floor sensor (26) comprises an acoustic sensor or an image sensor.

9. A system as claimed in any one of claims 1 to 8, further comprising a location sensor (32a, 32b).

10. A system as claimed in claim 8 or 9, comprising a robotic vacuum cleaner (38), wherein a floor sensor (32a) is integrated into the robotic vacuum cleaner.

11. An air quality control method, comprising:
(50) receiving a floor type indication of floor types within an indoor space;
(52) receiving activity information relating to occupant or device activities which are taking place on a floor area within the indoor space; and
(54) controlling a humidity level in dependence on the activity information and floor type indication, thereby to reduce an amount of dust resuspension caused by the occupant or device activities.

12. A method as claimed in claim 11, wherein the floor type indication comprises at least a hard floor or soft floor indication and the method comprises generating a map of floor types in different floor areas of the indoor space.

13. A method as claimed in claim 11 or 12, comprising predicting future occupant activities based on user behavior information thereby to create a floor use profile.

14. A method as claimed in any one of claims 11 to 13, comprising receiving the floor type indication and activity information from a robotic vacuum cleaner.

15. A computer program comprising computer program code means which is adapted, when said program is run on a computer, to implement the method of any one of claims 11 to 14.
